# EUROPEAN PATENT SPECIFICATION

(11) **EP 2 904 910 B1**
(45) Date of publication and mention of the grant of the patent: **15.05.2019**
(21) Application number: 15154069.7
(22) Date of filing: 06.02.2015
(51) Int. Cl.: A01N 65/08, A21D 15/00, A23B 4/22, A23K 20/111, A23K 30/00, A23L 5/20, A23L 33/105, A23B 4/20, A23B 9/26, A01N 37/10, A23L 3/3463, A21D 2/36

(54) **USE OF CHESTNUT TANNINS EXTRACT AS ANTI-OXIDANT, ANTI-MICROBIAL ADDITIVE AND TO REDUCE NITROSAMINES AND MYCOTOXINS**
VERWENDUNG VON KASTANIEN TANNINE EXTRAKTE ALS ANTIOXIDATIONSMITTEL, ANTIMIKROBIELLE ZUSATZSTOFFE UND UM NITROSAMINEN UND MYKOTOXINEN ZU VERRINGERN
L'UTILISATION D'EXTRAIT DE TANNINS DE CHÂTAIGNIERS COMME ANTIOXIDANT, ADDITIF ANTIMICROBIEN ET AFIN DE RÉDUIRE LES NITROSAMINES ET LES MYCOTOXINES.

(30) Priority: 07.02.2014 IT MI20140177
(43) Date of publication of application: 12.08.2015
(73) Proprietor: Gruppo Mauro Saviola S.r.l., 46019 Viadana (MN) (IT)
(72) Inventor: Bargiacchi, Enrica, 57016 Rosignano Marittimo, Castiglioncello (LI) (IT); Bellotti, Paolo, 3500 Hasselt (BE); Pinelli, Patrizia, 50127 Firenze (IT); Costa, Gianluca, 26040 Gussola (CR) (IT); Miele, Sergio, 56123 Pisa (IT); Romani, Annalisa, 51031 San Michele Agliana (PT) (IT); Zambelli, Pierluigi, 26041 Casalmaggiore (CR) (IT); Scardigli, Arianna, 50018 Scandicci (FI) (IT)
(74) Representative: De Gregori, Antonella

(56) References cited:
- WO-A1-2014/024020
- WO-A2-2004/089106
- WO-A2-2012/028928
- JP-A- 2007 269 643
- US-A- 4 211 795
- US-A1- 2011 083 683
- TAMARA FRANKIC ET AL: "In vivo antioxidant potential of Sweet chestnut (Castanea sativa Mill.) wood extract in young growing pigs exposed to n-3 PUFA-induced oxidative stress", JOURNAL OF THE SCIENCE OF FOOD AND AGRICULTURE, vol. 91, no. 8, 7 March 2011 (2011-03-07), pages 1432-1439, XP055144896, ISSN: 0022-5142, DOI: 10.1002/jsfa.4328
- PATEIRO M ET AL: "Effect of addition of green tea, chestnut and grape extract on the shelf-life of pig liver pâté", FOOD CHEMISTRY, vol. 147, 10 October 2013 (2013-10-10), pages 386-394, XP028766989, ISSN: 0308-8146, DOI: 10.1016/J.FOODCHEM.2013.09.153
- HUA WEI LIU ET AL: "A comparative study of growth performance and antioxidant status of rabbits when fed with or without chestnut tannins under high ambient temperature", ANIMAL FEED SCIENCE AND TECHNOLOGY, ELSEVIER, AMSTERDAM, NL, vol. 164, no. 1, 29 September 2010 (2010-09-29), pages 89-95, XP028361939, ISSN: 0377-8401, DOI: 10.1016/J.ANIFEEDSCI.2010.09.020 [retrieved on 2010-12-06]
- JOSÉ M. LORENZO ET AL: "Effects of natural (grape seed and chestnut extract) and synthetic antioxidants (buthylatedhydroxytoluene, BHT) on the physical, chemical, microbiological and sensory characteristics of dry cured sausage "chorizo"", FOOD RESEARCH INTERNATIONAL, vol. 54, no. 1, 1 November 2013 (2013-11-01), pages 611-620, XP055120107, ISSN: 0963-9969, DOI: 10.1016/j.foodres.2013.07.064
- JELENA ZIVKOVIC ET AL: "Scavenging Capacity of Superoxide Radical and Screening of Antimicrobial Activity of Castanea sativa Mill. Extracts", CZECH J. FOOD SCI., vol. 28, no. 1, 1 January 2010 (2010-01-01), pages 61-68, XP055145369,
- ELIZONDO A M ET AL: "Effect of tannins on the in vitro growth of Clostridium perfringens", VETERINARY MICROBIOLOGY, ELSEVIER BV, NL, vol. 145, no. 3-4, 26 October 2010 (2010-10-26), pages 308-314, XP027379746, ISSN: 0378-1135 [retrieved on 2010-04-14]
- BUDRIESI ROBERTA ET AL: "Stop Fitan: antispasmodic effect of natural extract of chestnut wood in guinea pig ileum and proximal colon smooth muscle", JOURNAL OF MEDICINAL FOOD, MARY ANN LIEBERT, LARCHMONT, NY, US, vol. 13, no. 5, 1 October 2010 (2010-10-01), pages 1104-1110, XP002637766, ISSN: 1096-620X, DOI: 10.1089/JMF.2009.0210 [retrieved on 2010-07-13]
- Anonym: "Team of chefs cook with tobacco during Cigar Festival", Daily News, 1 March 2013 (2013-03-01), XP055458816, Retrieved from the Internet: URL:http://www.nydailynews.com/life-style/ eats/team-chefs-cook-tobacco-cigar-festiva l-article-1.1277162 [retrieved on 2018-03-13]
- John J. Goldman: "The Nation; For the Unhappy Smoker, a Special Dish; Hoping to lure those frustrated by N.Y.C.'s ban, an eatery uses tobacco as a flavoring", Los Angeles Times, 6 April 2003 (2003-04-06), XP055458812, Los Angeles, Calif Retrieved from the Internet: URL:http://articles.latimes.com/2003/apr/0 6/nation/na-tobacco6 [retrieved on 2018-03-13]

## Description

The present invention relates to the use of chestnut tannin extract (Castanea sativa Mill.) and/or its fractions, alone or mixed with other polyphenols to increase stability to storage of seeds for food raw materials, pellets for feed for animals and end-products for human and for animals by acting as anti-oxidant or as anti-microbial additive, or by acting in the reduction of nitrosamines or mycotoxins concentrations in the seeds for food raw materials, pellets for feed for animals and end-products for human and for animals, with the proviso that food raw materials and food for humans and for animals are not tobacco plants; use according to the claims.

The present invention derives from the continuation of previous research that resulted in the filing of patent application MI2012A001419 entitled "Method for the production of tobacco aimed at reducing the content of nitrosamines" of August 8, 2012.

Oxidative deterioration in raw food materials and end-food products is caused by an oxidative chain reaction. Reactive oxygen species (ROS) are formed enzymatically, chemically, photochemically and by irradiation, as well as by decomposition and reactions between the same ROS. The hydroxyl radical and oxygen are the most reactive ROS. Their reaction with food substances produces undesired and carcinogenic volatile compounds, it destroys essential nutritive elements and modifies the functional properties of proteins, lipids and carbohydrates. The oxidation of lipids, for example, produces low-molecular-weight and volatile substances, such as aldehydes, alcohols and ketones. Crosslinking or cleavage of proteins can take place and also the production, on the part of carbohydrates, of low-molecular-weight compounds with carbonyl groups. Vitamins are easily oxidized by ROS, in particular β-carotene, as also tocopherol, riboflavin, vitamin D and ascorbic acid [Choe E., Min D. B, Chemistry and Reactions of Reactive Oxygen Species in Foods, Crit. Rev. In Food Sci. Nutr. 46 (1), 1-22, 2006]. This results in the loss of the organoleptic and nutritive quality, with the development of anomalous odours and aromas.

The total microbial charge, and in particular, *Escherichia coli* L., *Serratia* sp., Salmonella, total and fecal coliforms, yeasts and mildew, are among the main causes of the microbiological contamination of food, and in particular meat and dairy products [Jay J.M., Modern food microbiology, ISBN 0-412-07691-8, 1996; Zhno G., Giuffreda A., Giufrè N., Greco V., Panebianco A., Accertamenti su Serratia marcescens isolata da carne suina cotta e refrigerata, Industrie Alimentari 49 (508): 15-31, 2010; Yang X., Badoni M., Youssef M.K., Gill C.O., Enhanced control of microbiological contamination of product at a large beef packing plant, J. Food Prot. 75(1):144-9, 2012; D'Elia G., Bacci C., Bassi L., Boni E. Alpigiani I., Brindani F., Le carni separate meccanicamente: aspetti produttivi microbiologici e di etichettatura, Industrie Alimentari 51(521):30-36, 2012].

N-nitrosamines are, in turn, formed by the reaction between nitrites or nitrous acid and secondary and tertiary amines in an acid environment and under suitable conditions [Gray J. I. e Dugan L.R. Jr., J. Food Sci 40 (5), 981-984, 1975]. Nitrites and nitrates are deliberately added to preserved meat in order to stabilize its colour and provide protection from the risk of Botox; nitrates, moreover, are contained in numerous vegetables where they can be subjected to reduction to nitrites. Amines and their precursors, such as proteins, amino acids, phospholipids and compounds of quaternary ammonium, are also present in many food products of both a vegetable and animal origin. Nitrosamines have long been considered carcinogenic compounds (IARC Monographs 1974, vol. 4) and a reduction in their concentration is a primary objective for the hygiene and safety of food products for human beings and animals. The main nitrosamines considered are, as a pure example and without excluding others, nitrosamines deriving from the reaction of nitrites or nitrous acid with amino-alcohols, diethanolamine, triethanolamine, N,N-diethanolamine, N,N-dimethylethanolamine, 1-methoxy-2-propylamine, 2-amino-2-methyl-1-propanol, 3-methoxypropylamine, morpholine; the present invention is not limited to these, but considers, by similarity, all nitrosamines present in food products, either fresh or newly formed through various mechanisms, during the period of their preservation, before and after the production of end-products for the nutrition of human beings and animals and up until consumption.

Mycotoxins, fungal metabolites having a toxic activity, can in turn cause the onset of acute and/or chronic intoxications, known as mycotoxicoses. Their presence in animals feeds causes a reduction in growth and reproduction problems and, in more serious cases, acute toxicosis in reared animals. The use of contaminated food products, moreover, not only has negative effects on the animals ingesting them, but also induces the passage of toxins or their derivatives in milk, eggs and meat [Miele S., Salera E., Sbrana M., 2004. Le Micotossine: linee guida per il controllo agronomico e identificazione analitica. Seminario Regione Toscana - Accademia dei Georgofili, 26 October 2004, atti]. Among mycotoxins that attack cereals, *Fusarium* is certainly among those most frequently identified. The main fusariotoxins are Deoxynivalenol (DON), Zearalenone (ZEA), Nivalenol (NIV), all three produced by *F. culmorum* and *F. graminearum,* Fumonisins, produced by *F. verticillioides* (moniliform) and by *F. proliferatum,* toxins T2 and HT-2, produced by *F. sporotrichioides,* and Diacetoxyscirpenol (DAS) produced by *F. poae* and *F. equiseti.*

As far as the clinical effects of these toxins is concerned, it is suspected that Fumonisin B1 can cause esophageal cancer. Horse and swine have proved to be particularly sensitive to Fumonisins. In horses, these toxins cause nervous problems (toxic meningitis), wherein in swine they cause pleuropneumonia (lung edemas). In cattle, Fumonisins cause hepatitis and a lowering of the immune system (immunosuppression). Trichothecenes (DON, DAS, NIV, T2) generally cause a progressive deterioration in the health of animals, with a lowering in yields and consequently significant economical losses. The syndromes to which they also give rise can be distinguished as emetic, characterized by vomiting and bleeding (Viljoen J. H., Mycotoxins in grain and grain products in South Africa and proposals for their regulations, Univ. of Pretoria etd, PhD Thesis, 2003).

Aflatoxins (AF) are a group of mycotoxins produced by strains of *Aspergillus flavus* (producer of AF B₁ and B₂) and *Aspergillus parasiticus* (producer of AF B₁, B₂, G₁ and G₂). In most cases, AFB1 is the toxin present in the highest quantity and on which the interest of researchers is particularly focused due to its high acute and chronic toxicity and the carcinogenic activity it exerts on animals, in addition to the potential effects on human beings. In all the animal species studied, AFs cause liver cancer and, at times, also kidney cancer; in particular, AFB1 is orally the most hepatocarcinogenic active known. Its intake can occur through contaminated vegetable food products or with animal products, such as milk. Cows, in fact, transform AFB1 (1 = carcinogenic for human beings) into AFM1, which IARC has classified as 2B, which means "possibly carcinogenic for human beings".

Finally, Ochratoxins are produced in our environments by *Penicillium spp.* and *Aspergillus ochraceus.* Ochratoxins are extremely harmful for human beings; in particular, Ochratoxin A (OTA) can cause serious problems for the kidneys and immune system and in the past has been considered as being the cause of tumours and malformations in infants. This substance can persist in the organism and cause long-term damage. Its intake can occur through contaminated vegetable food products or with products deriving from cereals, as in the case of beer produced with barley malt [EF-SA, Statement on recent scientific information on the toxicity of Ochratoxin A, EFSA J. 8(6):1626, 2010].

### STATE OF THE ART

Consumers are therefore tending to ask for simpler and "green" labels of food products. In this respect, there is therefore a growing interest in excluding synthetic preservatives such as TBHQ (tertiary butyl-hydroxy-quinone), BHT (butyl-hydroxytoluene), BHA (butyl-hydroxy-anisol) and EDTA (ethylene-diamine tetra-acetic acid), from food products. Instead of synthetic preservatives, there is an increasing request for natural substances among which, in particular, extracts of *Labiatae* such as rosmary, sage, origan, thyme, mint and mixtures thereof, or rosmarinic and carnosic acid [Sandusky C. L., Reynhout G. S., Jones T. S., Method of extending color life of modified atmosphere packaged fresh red meat using Labiatae plant extracts, US Pat. 7,037,543/2000].

The few associations of food-tannin compounds already known envisage the use of condensed tannins only. A previous patent application EP2345628 (A1) entitled "Use of natural extracts of tannin and non-tannin materials for improving soil fertility and providing a starter effect on cultivations, and a tannin and non-tannin phytocomposition" of the Mauro Saviola Group already described extracts obtained from Castanea spp.

These are therefore products that have already been used, even if for other purposes, in agricultural productions, for example for adjusting the pH of the soil and irrigation water and as growth stimulant and resistance to various pests, on the basis of patent applications EP 1 464 635 (A1) of 26-08-2003 and EP 2 345 628 (A1) of 14-01-11 in the name of the Saviola Group. Pateiro et al. (2013), Food Chemistry, 147, 386-394 and José M. Lorenzo et al. (2013), Food research international, 54(1), 611-620, disclose chestnuts tannins extract for use as antioxidant in food, especially for preservation of meat product.

The present patent application represents, to all effects, a continuation and development of the above-mentioned patent applications.

### DETAILED DESCRIPTION OF THE INVENTION

The present invention overcomes the problems of the known art, having surprisingly found a method for the treatment of raw food materials and food products for human beings and animals, based on the use of a natural chestnut tannin vegetable extract (Castanea sativa Mill.) and its standardized fractions, with antioxidant, anti-microbial and antifungal characteristics, as described in greater detail hereunder.

The present invention represents the result of the continuation of previous research which, as already mentioned, has led to the filing of patent application MI2012A001419 entitled "Method for the production of tobacco aimed at reducing the content of nitrosamines" of August 8, 2012.

As is known, a chestnut tannin extract is characterized by the presence of hydrolyzable tannins, mainly consisting of phenol compounds such as gallic and ellagic acids, partially or totally esterified with a D-glucose molecule. The antioxidant activity of the aqueous extract has been demonstrated and can be measured with the FRAP assay (reduction in the tripyridyltriazine/Fe(III) complex to the blue ferrous form, with an increase in the absorbance at 593 nm).

It has been unexpectedly found that the use of the chestnut tannin extract, object of the present invention, on raw food materials (e.g. oils, oilseeds, cereals) or on food products for human beings and animals, inhibits the oxidative degradation phenomena of these materials and at the same time reduces microbiological contamination and the formation of nitrosamines and mycotoxins, without altering the taste and flavour, when operating with suitable concentrations, also in mixtures with other polyphenols. An object of the present invention therefore relates to the use of chestnut tannin extract and/or its fractions, alone or mixed with other polyphenols to increase stability to storage of seeds for food raw materials, pellets for feed for animals and end-products for human and for animals by acting as anti-oxidant or as anti-microbial additive, or by acting in the reduction of nitrosamines or mycotoxins concentrations in the seeds for food raw materials, pellets for feed for animals and end-products for human and for animals, with the proviso that food raw materials and food for humans and for animals are not tobacco plants, use according to the claims.

When the chestnut tannin extract and/or its fractions are used in a mixture with other polyphenols, these are preferably selected from green tea extract, artichoke extracts, olive leaves, olive paste extracts, grapeseed extracts, rosemary extracts, beetroot extracts. Said polyphenols have a synergizing action of the antioxidant and antimicrobial effect of chestnut tannin extracts. These extracts further allow reducing the content of nitrosamines and mycotoxins when added to raw food materials and food products for human beings and animals.

A further object of the present invention also relates to a method for the treatment of raw food materials and food products for human beings and animals that consist of using, according to the claims, chestnut tannin extract and/or its fractions, alone and/or mixed with other polyphenols to increase stability to storage, in particular by reducing the content of mycotoxins in cereals, by reducing fungal infestations in legumes, by stabilizing bakery products, by preserving meat and by stabilization and increase in the biological and functional properties of animal feeds.

For the purposes of the present invention, the chestnut tannin extract and/or its fractions are used in liquid form in an amount ranging from 1 to 40% by weight, preferably from 13 to 25 % by weight, of tannins with respect to the total weight of the extract or its fractions, or in powder form in an amount ranging from 30 to 90% by weight of tannins with respect to the total weight of the extract or its fractions.

Said chestnut tannin extract and/or its fractions are obtained as described hereunder. With the term chestnut tannin extract it is meant thus any mixture in any weight ratio of the fractions 1 to 9 below defined, both in liquid and solid form.

These products can be added: 1) to seeds and raw materials (for example, and without limiting its applicative possibilities, cereals and proteoleaginose seeds), in the sowing phase, during growth in the fields and during the harvesting and storage phase, to avoid contamination phenomena from fungal species and consequent degradation; 2) to raw materials for the food industry (for example, and without limiting its applicative possibilities, oils and protein cakes) for reducing oxidative phenomena and consequent rancidity, as well as microbiological contamination; 3) to food in the preparation phase, or formulations, for both animals and human beings, to preserve its quality and nutritive characteristics and for reducing health risks.

In the case of seeds, a treatment method has been developed, consisting in two applications effected as follows: the first, on the seed (for example, and without limiting its applicative possibilities, wheat grains); the second, on ears of corn. The first application was effected using concentrations ranging from 0.1 to 10% by weight, with respect to the total weight of the seed to be treated, and preferably from 0.3 to 4% by weight, with respect to the total weight of the seed to be treated, of tannin extract in powder form at 30-90 % by weight of tannins.

The second application was effected using concentrations ranging from 0.5 to 5% by weight, and preferably from 1 to 1.5% by weight, with respect to the total weight of the water or liquid means used for carrying out the spraying treatment on the ears of corn (generally about 100 kg/ha) of tannin extract in liquid form, at 13-25% by weight of tannin, or of one of its fractions. In particular, fraction 4 described in Example 1) below, was used.

In the case of raw food materials, a chestnut extract at 13% by weight of tannins was added, for example, to kernels and proteoleaginose seeds at concentrations ranging from 0.01 to 5% by weight, and preferably from 0.1 to 0.5% by weight, with respect to the total weight of the product to be treated. The product is sprayed on the kernels and seeds in the harvesting phase or during the grain remixing phase in the storage sites.

In the case of feed products, formulations pelleted with pet-food were prepared, to which liquid chestnut extracts had been added at 37-40% by weight of tannins, for increasing their preservability and reducing the risk of microbiological contamination, with consequent dietetic problems for animals and the risk of diarrhea. The extracts were added to the mixture before extrusion, in a quantity ranging from 0.01 to 5% by weight, and preferably from 0.3 to 0.7% by weight with respect to the total weight of the product to be treated.

In the case of end-food products, both chestnut tannin extract and its fractions were used, alone or mixed with other sources of polyphenols, among which, in particular, green tea extract, hydroxytyrosol, artichoke extract, olive leaves, olive paste extract, grapeseed extract, rosemary extract and beetroot extract (Beta vulgaris L. var. cruenta L. Salisb.). The end-products examined are fresh meat, preserved meat (e.g. sausages) and bakery products, operating at dosages ranging from 0.0001 to 3% by weight of tannin extract and/or its fractions, also mixed with selected polyphenols, and preferably ranging from 0.001 to 1.5% by weight with respect to the total weight of the product to be treated.

In particular, the chestnut tannin extract and/or its fractions, object of the present patent application, was obtained from a hot aqueous extraction plant of chestnut wood and subsequent cold fractionation. More specifically, the cold extraction and fractionation method comprises the following phases:
a) a hot aqueous extraction phase of chestnut wood by means of leaching;
b) a pre-filtration phase of the leaching liquid coming from step a) with a perlite filter for eliminating the coarser particles (sawing, soil, sand, etc.) and then with filtering cartridges for withholding particles having a size larger than 25 microns; the so obtained liquid fraction containing from 4 to 5% by weight of tannin is named " Filtered tannic broths" (indicated hereunder with fraction 1. Filtered tannic broths);
c) a first step of concentration by a nanofiltration phase of the liquid coming from step b); the products resulting at the end of phase c) are: "Permeate 1^{st} concentration step" (fraction 2) and "Concentrate 1^{st} concentration step" (fraction 3), the latter having a content of about 13% by weight of tannins;
d) the "Concentrate 1^{st} concentration step" product resulting from phase c) is subjected to sedimentation and clarification by the following steps carried out in sequence:
   - cooling at 10-12°C for 24-48 hours, allowing the sedimentation of coarse particles still present to be sedmented;
   - mechanical centrifugation to obtain a liquid, called "Concentrate 1^{st} concentration step after cooling" (fraction 4), devoid of suspended particles; the content of tannins of fraction 4 remains about 13% by weight of tannins;
      the residual material of the step of sedimentation and clarification (by centrifugation) is called " Clarification sediment" (fraction 9);
e) final concentration by means of nanofiltration obtaining at the end a "Permeate 2^{nd} concentration step" (fraction 5) and a "Concentrate 2^{nd} concentration step" (fraction 6), the latter having a content of about 40% by weight of tannins;
f) reverse osmosis step to optimize the process of recovery of the tannin from the permeates resulting from steps c) and e): the two permeates (fraction 2 and fraction 5) are joined and subjected to a treatment by reverse osmosis; at the end of this phase they are obtained the "Permeate osmosis" (fraction 7) and the "Concentrated osmosis" (fraction 8), the latter having a content of about 6-7% by weight of tannins. The extraction phase a) by leaching, carried out at a temperature of 110-120°C envisages that pieces of chestnut wood be charged into a battery of autoclaves operating in countercurrent, in series. Assuming a set of eight autoclaves, the clean water, entering the set of autoclaves at a temperature of 110-120°C, encounters the almost exhausted wood (i.e. wood that has undergone six extraction passages with aqueous solution) and the solution leaving said first autoclave, enriched with tannins, is fed to the adjacent autoclave (second autoclave) where it dissolves the tannin contained in a higher concentration in the wood present in said autoclave, said wood having been subjected, in turn, to five extraction passages with aqueous solution. The solution leaving said second autoclave, further enriched with tannin, dissolves the tannin in the wood present in the adjacent autoclave (third autoclave) containing wood that has undergone four extraction passages with aqueous solution. And so forth, until the solution leaving the next-to-last autoclave (sixth autoclave), particularly rich in tannin, encounters new wood, i.e. freshly chopped wood, entering the battery of autoclaves, and is then discharged from said autoclave (seventh autoclave), forming the still unfiltered tannic broth sent to subsequent treatment.

Said solution coming from extraction by leaching is characterized by a percentage of tannin of 4-5% by weight, with an extraction yield of about 60-65%.

In particular, the fractions resulting from the process described above are the following:
1. Filtered tannic broths;
2. Permeate 1^{st} concentration step;
3. Concentrate 1^{st} concentration step (at about 13% by weight of tannins);
4. Concentrate 1^{st} concentration step after cooling (at about 13% by weight of tannins);
5. Permeate 2^{nd} concentration step;
6. Concentrate 2^{nd} concentration step (at about 40% by weight of tannins);
7. Permeate osmosis;
8. Concentrate osmosis;
9. Clarification sediment;

Preferred fractions for the uses according to the present invention are the following fractions:
4. Concentrate 1^{st} concentration step after cooling (at about 13% by weight of tannins);
6. Concentrate 2^{nd} concentration step (at about 40% by weight of tannins); used individually and/or combined with each other and/or combined with other fractions and/or mixed with other polyphenols.

Said fractions can be used in the concentrated liquid form directly obtained from the method previously disclosed or in form of powder after atomization.

The atomization phase is carried out by feeding the liquid phase to a spray-dryer, obtaining therefore the product in form of a powder.

The use of the chestnut tannin extract according to the present invention, obtained with the method previously described, is particularly effective, as the chestnut tannin extract is characterized by a much higher antioxidant action and a knockdown power of the total bacterial count, total and fecal coliforms, yeasts and mildew present in food products, with respect to tannin extracts already known.

The following examples are provided for purely illustrative purposes of the present invention and should in no way be considered as limiting its protection scope, as defined by the enclosed claims.

### Example 1

### Antioxidant and anti-radical characteristics of usable fractions

Samples were analyzed, coming from a hot aqueous extraction plant of chestnut wood and cold fractionation, obtained as previously described.

In particular, the following fractions examined were:
1. Filtered tannic broths;
2. Permeate 1^{st} concentration step;
3. Concentrate 1^{st} concentration step (with 13% weight of tannins);
4. Concentrate 1^{st} concentration step (with 13% weight of tannins) after cooling;
5. Permeate 2^{nd} concentration step;
6. Concentrate 2^{nd} concentration step (with 40% weight of tannins);
7. Permeate osmosis;
8. Concentrate osmosis;
9. Clarification sediment.

The antioxidant and anti-radical activity is indicated for these (Table 1), the latter measured *in vitro* using the stable radical DPPH method. (Campo M., Pinelli P., Romani A., HPLC-DAD- MS Characterization and Antioxidant Activity of Sweet Chestnut (Castanea sativa Mill.) Fractions, XXVI International Conference of Polyphenols, Polyphenols Communication, 2012, Vol. I, Pag.135-136; FOOD CHEMISTRY, 2014 submitted.;

Campo M., Pinelli P., Romani A., HPLC-DAD-ESI-MS Characterization and Antioxidant Activity of Hydrolyzable Tannins from Sweet Chestnut (Castanea sativa Mill.) Fractions. FOOD CHEMISTRY, 2014 submitted.)

**Table 1: antioxidant and anti-radical activity, expressed as equivalents of gallic acid (GAE) and as quantity of antioxidant necessary for reducing the initial activity of DPPH by 50% (EC₅₀)**

| Process fractions according to example 1 | GAE (g/100g extract | EC₅₀ (µM) |
|---|---|---|
| 1 | 2.4 | 0.70 |
| 2 | 0.6 | 2.00 |
| 3 | 9.1 | 0.44 |
| 4 | 7.9 | 1.00 |
| 5 | 2.4 | 1.43 |
| 6 | 31.0 | 2.56 |
| 7 | 0.1 | 2.40 |
| 8 | 7.4 | 1.51 |
| 9 | 0.5 | 0.55 |

### Example 2

### Treatment of soybean seeds for the control of Phomopsis [f. asc. Diaporthe phaseolorum var. sojae e var. culivora (soybean stem canker agent)]

The contamination of soybean seeds with Phomopsis/Diaporte makes the same seed non-certifiable for use as seed, unless treated with chemical tanning substances. A total of 10 application tests were carried out on soybean seeds with moderate to high contamination. It was unexpectedly found that the treatment of the seed with chestnut extract at 13% by weight of tannins (fraction 4) at a concentration of 0.30% by weight with respect to the total weight of the seeds to be treated, by spraying the product on the seed during handling phase before bagging, reduces the presence of the inoculum below the detection limit.

The control of the presence and vitality of the spores of the fungus was effected on the seed treated with the formulation according to the present invention, following the method described by Zhang A.W. et al. [Molecular detection of Diaporthe phaseolorum and Phomopsis longicolla from soybean seeds. Phytopathology 89: 796-804, 1999] and Schena L. et al. [Real-time quantitative PCR: a new technology to detect and study phytopathogenic. European Journal of Plant Pathology 110: 893-908, 2004].

### Example 3

### Treatment of seeds and ears of corn with chestnut tannin extract for reducing the content of fumonisins and deoxynivalenol(DON)

After two years of preliminary tests, which considered only the tanning of hard wheat seeds with tannin extract in powder form or only the treatment of ear of corn with tannin extract solutions or fractions thereof, a method was developed, consisting of two synergetic applications to be effected consecutively. The first treatment consisted of the tanning of wheat kernels, immediately before sowing, with a chestnut tannin extract in powder form, containing 75% by weight of tannins, in concentrations ranging from 0.5 to 1.5 kg/100kg of kernels. The second treatment is represented by the application, through the leaves, at stage 50 Zadoks scale [com.agronomy.wisc.edu] of fraction 4 of Example 1, at a concentration of 1-1.5% by weight in water, distributed at a dosage of 100 1/ha. The subsequent analyses on the samples of kernels collected showed that, with respect to the non-treated blank sample, the treatments proposed according to the new method significantly reduced the extent of the fungal rot of the ear of corn and the contamination from fumonisins and DON of the grains below the law limits in force (for example, 1750 µg/kg for DON in the case of hard wheat). The fungus charge, total and endophytic, measured in the kernels at harvesting, was lower in the samples treated with respect to the blank sample, thus demonstrating a reduction in contamination from fumonisins and DON through an intervention with a natural product, having a low environmental impact.

### EXAMPLE 4

### Formulations of mixtures based on tannin extract and its fractions with matrices and extracts based on polyphenols to be used as food ingredients/flavours.

The following formulations were formulated and tested in various tests:
1. Powder chestnut tannin extract having a content of 15 to 90% by weight of tannins;
2. Liquid chestnut tannin extract having a content of 3% to 40% by weight of tannins;
3. Solid Cynara TAN 90/10: 90% by weight of solid Cynara extract (spray-dried artichoke 26.94 mg/g total polyphenols) and 10% weight of powder chestnut tannin extract having a content of 75% by weight of tannins;
4. Solid Cynara TAN 80/10/10: 80% by weight of solid Cynara extract (spray-dried artichoke 26.94 mg/g total polyphenols), 10% by weight of powder chestnut tannin extract having a content of 75% by weight of tanninsand 10% by weight of tannin extract condensed from grapeseed powder with a titre of 95%;
5. Liquid Cynara TAN 85/15: 85% by weight of liquid Cynara extract (paste concentrated in an evaporator, extracted from dried artichoke leaves) and 15% by weight of liquid chestnut tannin extract having a content of 40% by weight of tannins (fraction 6);
6. Liquid Cynara TAN 80/15/5: 80% by weight of liquid Cynara extract (paste concentrated in an evaporator, extracted from dried artichoke leaves), 15% by weight of liquid chestnut tannin extract having a content of 40% by weight of tannins (fraction 6) and 5% by weight of tannin extract condensed from grapeseed powder with a titre of 95%;
7. Concentrated TAN-OL paste 50/50: 50% by weight of liquid chestnut tannin extract having a content of 30% by weight of tannins and 50% by weight of concentrated olive leaf paste with a titre of 3% in oleuropein;
8. Concentrated TAN-OL-RED paste 30/30/40: 30% by weight of liquid chestnut tannin extract having a content of 30% by weight of tannins, 30% weight of concentrated olive leaf paste with a titre of 3% in oleuropein and 40% weight of beetroot extract;
9. Concentrated TAN-OHTy-RED paste 20/40/40: 20% by weight of liquid chestnut tannin extract having a content of 30% by weight of tannins, and 40% by weight of concentrated solution obtained from olive paste with a titre of 3% expressed as hydroxytyrosol and 40% weight of beetroot extract;
10. Concentrated TAN-OHTy paste 30/70: 30% by weight of liquid chestnut tannin extract having a content of 30% by weight of tannins and 70% weight of concentrated solution obtained from olive paste with a titre of 3% expressed as hydroxytyrosol;
11. Concentrated ROSMA-TAN paste 70/30: 70% by weight of rosemary extract at 3% titrated in rosmarinic acid and carnosol and 30% by weight of liquid chestnut tannin extract having a content of 30% by weight of tannins;
12. Green-TAN-OL powder 20/40/40: 20% by weight of green tea extract from 4 to 95% in EGCG, 40% by weight of chestnut tannin extract in powder form having a content of 40 to 75% by weight of tannins, and 40% by weight of olive-oil extract in powder form with a titre of 3 to 17% in oleuropein.

The mixtures are suitable to be used in bakery products, dairy products, and fresh and preserved meat, as detailed in the following examples.

### Example 5

### Use of chestnut tannin extracts for the stabilization of bakery products.

The chestnut tannin extract according to the present invention, having an antioxidant and antimicrobial nature, alone or mixed with hydroxytyrosol obtained from olive paste, was used for the stabilization of rusks, sweet biscuits and biscuits filled with almonds. The TAN-OHTy formulation was used, indicated as formulation 10 in the previous Example 4, compared with the use of hydroxytyrosol alone.

In the test on rusks, TAN-OHTy was added to the dough with a concentration equal to 750 ppm. Concentrations of TAN-OHTy such that the chestnut tannin extract having a content of 30% by weight of tannins present in this formulation TAN-OHTy, brings to achievea final tannnins concentration ranging from 300 to 5,000 ppm and preferably from 500 to 750 ppm, can in any case be used for the purposes of the present invention. The hydroxytyrosol was added in a concentration equal to 500 ppm. The organoleptic characteristics were evaluated and the rancidity test was carried out on all the product types, analyzed at time zero and with accelerated aging in an oven at 52°C.

The accelerated aging protocol, harmonized from that described in European Pharmacopeia (EDQM Reference Standards), envisages the assimilation of 10 days to a month of stability. The validated internal food protocol establishes a month of stability, corresponding to 7 days of accelerated aging at 52°C.

The results of the stability tests on rusks are indicated at time 0, 70 and 110 days (Table 2).

From these results, it appears that the formulation TAN-OHTy provides a marked improvement in all the qualitative parameters of resistance to preservation, under accelerated aging protocol conditions. Analogous analyses were effected on samples maintained at room temperature and the results, after 8 months and 1 year of preservation, show that both the samples treated with natural extracts show an absence of *off-odours* and lower values of both peroxides and total acidity. The samples analyzed after 18 months of stability at room temperature, on the contrary, show unpleasant odours of rancidity in the blank sample, which, however, is absent in the samples treated.

This is confirmed by the test of Kreis [Narasimhan S., Vasanth Kumar A.K., Ravi R., Chand N., Optimization of Kreis Test for edible oils, J. Food Lipids 6(2):107-115, 1999], whose result, highly positive, confirms that the product without natural extracts is in the phase in which there is the decomposition of hydroperoxides, with the formation of volatile products typical of oxidation. The natural ingredient/aroma formulated according to the present invention proves to guarantee antioxidant protection also acting as radical-scavenger, interfering with and slowing down the formation of hydroperoxides.

It should be pointed out that the free acidity of the samples subjected to the accelerated aging test (time 0), cannot be considered a useful parameter, as it is not indicative of the oxidation of the lipid fraction due to dependence on the high temperature to which the products are subjected. Also with respect to the number of peroxides, accelerated shelf-life studies, with respect to controls at room temperature, show that the first aging protocol is not a reliable indicator, as the oxidizable substrate proves to be more abundant due to the hydrolysis of the triglycerides (correlated with the addition of extra-virgin olive oil to the product) which takes place at a high temperature, with an increase, in all of the samples, in the number of peroxides, a process which cannot be correctly limited even by the presence of natural antioxidants.

Also in this case, the oxidation and rancidity processes proved to be much more limited in the sample treated with TAN-OHTy.

An analogous experiment was carried out on biscuits, almond biscuits and toasted almond biscuits, with the aim of inhibiting the oxidation and rancidity processes. Formulations such as formulation 3, 4, 5, 6 and 12 of Example 4 were used in particular, at the same dosages as the test described in the present example.

All the bakery products mentioned above were subjected to the organoleptic test in order to correctly modulate the bitter and astringent taste effect of the tannins used. The filled biscuits and almond biscuits proved to be much more easily adaptable than the rusks.

**Table 2 - Results relating to the stability of "rusk products" subjected to accelerated aging: (1) blank sample, (2) hydroxytyrosol, (3) formulation according to the invention: TAN-OHTy.**

| PARAMETERS | TREATMENTS | | | METHODS |
|---|---|---|---|---|
| (incubation for 0 days at 52°C) | | | | |
| | **1** | **2** | **3** | |
| Humidity % at 105°C | 2.28 | 2.36 | 2.31 | Drying |
| Total acidity % | 0.32 | 0.37 | 0.39 | Titration |
| Peroxide Nr. meq O₂/kg | 0.29 | 0.35 | 0.36 | Titration |
| Kreis reaction | Negat. | Negat. | Negat. | Titration |
| Raw oils and fats % | 5.90 | 5.87 | 6.10 | Soxhlet |

| (incubation for 70 days at 52°C) | | | | |
|---|---|---|---|---|
| | **1** | **2** | **3** | |
| Humidity % at 105°C | 2.00 | 2.16 | 2.23 | Drying |
| Total acidity % | 0.37 | 0.48 | 0.40 | Titration |
| Peroxide Nr. meq O₂/kg | 0.40 | 0.53 | 0.58 | Titration |
| Kreis reaction | Negat. | Negat. | Negat. | Titration |
| Raw oils and fats % | 6.40 | 6.70 | 6.76 | Soxhlet |

| (incubation for 110 at 52°C) | | | | |
|---|---|---|---|---|
| | **1** | **2** | **3** | |
| Humidity % at 105°C | 1.83 | 1.96 | 2.09 | Drying |
| Total acidity % | 0.30 | 0.44 | 0.50 | Titration |
| Peroxide Nr. meq O₂/kg | 3.98 | 4.98 | 4.68 | Titration |
| Kreis reaction | Negat. | Negat. | Negat. | Titration |
| Raw oils and fats % | 6.78 | 6.85 | 6.91 | Soxhlet |

### Example 6

### Use of chestnut tannin extract for the stabilization of meat-based products.

The chestnut tannin extract, with antioxidant and antimicrobial characteristics, was used for the stabilization of pork, beef hamburgers and sausages, with various formulations indicated in the previous Example 4.

In a first test, the products based on minced beef meat were treated with the following formulations and dosages:
1) Non-treated blank (control);
2) Standard Additive 1: a mixture of 100 g of sodium ascorbate, 100 g of ascorbic acid + 10 g of cochineal; 210 mg of this mixture are added to 100 g of freshly minced beef meat;
3) Solid Cynara TAN 80/10/10 (formulation 4 of Example 4), added in an amount equal to 300 mg to 100 g of freshly minced beef meat;
4) TAN-OL-RED (formulation 8 of Example 4), added in an amount equal to 300 mg to 100 g of freshly minced beef meat;
5) TAN-OHTy-RED (formulation 9 of Example 4), added in an amount equal to 300 mg to 100 g of freshly minced beef meat.

Controls related to: pH and total bacterial count (Table 3) and were completed by a visual examination and organoleptic test.

A control on the total bacterial count (see Table 3) showed that after four days, the samples treated with the formulations solid Cynara TAN 80/10/10 and TAN-OHTy-RED showed an improved behavior with respect to the sample treated with Standard Additive 1. Organoleptic analysis showed good behaviour for the formulation solid Cynara TAN 80/10/10 and an excellent preservation of the bright red colour with the use of TAN-OHTy-RED, in which all the red pigments relating to the beetroot extract are stable under the test conditions of the sample.

A second test, on giblets, minced beef and pork sausage, related to the use of the same formulations as Example 4 at a concentration of 1.2% by weight of giblets, 0.4% by weight of minced adult beef and 0.2% by weight of sausage (weight % expressed with respect to the total weight of giblets, minced beef and sausage respectively). In this case, in addition to the total bacterial count, total coliforms, fecal coliforms in MPN/100 g, yeasts and yeasts+mildew in UFC/g, were evaluated.

Yeasts and mildew proved to be inhibited after treatment on both giblets and minced adult beef, whereas they were not evaluated in the sausage as they were not present.

In the giblets, the total coliforms initially showed values equal to 1800 UFC/g; in the test with solid Cynara TAN 80/10/10 they dropped to 1,200 UFC/g after 4 days, subsequently rising to a value equal to 4,400 after 8 days, whereas in the tests with TAN-OL-RED and TAN-OHTy-RED, the value was reduced to 600 UFC/g in the first 4 days, rising to 1,500 and 1,600 UFC/g, respectively, after 8 days.

The same parameter, measured on minced adult beef, initially showed a value equal to 20, after 8 days reaching 1,600 UFC/g in the test with solid Cynara TAN 80/10/10, whereas in the test with TAN-OHTy-RED, a value of 90 was reached after 4 days, which remained constant until the eighth day.

In the test with solid Cynara TAN 80/10/10 on sausages, the total coliforms maintained values of 20 and 50 UFC/g for the first 4 days, dropping to values of 20 for all the samples after 8 days.

Fecal coliforms were neither present on the sample of sausage nor on the sample of minced adult beef, whereas values equal to 27,800 MPN/100 g (MPN/100g corresponds to Most Probable Number/100 g) were found at time zero and to 110,000 MPN/100g at 4 days in the control sample of non-treated giblets.

This value, on the other hand, is equal to 100,000 MPN/100 g in the test with the sample of giblets to which solid Cynara TAN 80/10/10 has been added after 4 days; in the test with the sample of giblets containing TAN-OL-RED and with TAN-OHTy-RED, values equal to 4,000 and 5,000 MPN/100 g respectively are reached after 4 days, subsequently rising to values equal to 12,000 and 14,000 MPN/100 g after 8 days.

**Table 3: results of the first test on minced beef. Control = non-treated samples; sample A = treated with the formulation Cynara TAN dry 80/10/10 (with hydrolyzable and condensed tannins; sample B treated with the formulation TAN-OL-RED and sample C = treated with the formulation TAN-OHTy-RED. Analysis 4 days after the preparation (Total bacterial count = TBC, UFC/g, ref. ISO 2003/4833; pH ref. CE 2005/2073 mod. reg. CE 2007/1441)**

| | 1 day | | 4 days | |
|---|---|---|---|---|
| Sample | TBC & pH | Significance | TBC & pH | Significance |
| Control | 2.7E+04 | 9,0E+03 | 4.2E+06 | 1.4E+06 |
| | 5.80 | 8,0E+04 | 5.75 | 1.2E+07 |
| Sample A | | | 4.2E+05 | 1.4E+05 |
| | | | 5.80 | 1.2E+06 |
| Sample B | | | 6.9E+05 | 2.4E+05 |
| | | | 5.89 | 2.0E+06 |
| Sample C | | | 4.6E+05 | 1.6E+05 |
| | | | 5.86 | 1.3E+08 |
| Standard additive 1 | | | 5.5E+05 | 1.9E+05 |
| | | | 5.86 | 1.6E+08 |

### Example 7

### Stabilization of samples of animal feeds with tannin extract

A formulation was prepared for pet-food (dogs) based on cereals (56% by weight), meat and meat products (22% by weight), oils and fats (3% by weight), integral soybean seed and linseed (2% by weight), vegetables (1.5% by weight), water up to 100. From 0.3 to 0.7% by weight of chestnut tannin extract and its mixtures, alone and/or mixed with antioxidant fractions deriving from green tea, artichoke extracts, olive leaves, olive paste, grapeseeds and beetroot, were added to this control formulation. More specifically, in the present example, formulations were tested after the addition of TAN-OL-RED (formulation 8 of Example 4) in an amount of 0.7% by weight. The control samples and the samples treated with the formulations according to the present invention were evaluated by technical breeders with respect to the palatability of the compounds and quality of the feces of the animals treated. For all the samples treated, the total antioxidant and anti-radical capacities were evaluated by means of a stable radical DPPH in vitro test [for the stable radical in vitro test see: Heimler D., Vignolini P., Dini M. G., Vincieri F. F., Romani A. "Antiradical activity and polyphenol composition of Brassicaceae edible varieties" Food Chemistry, 2006, 99, 464-469].

The samples treated with the formulations according to the present invention were always evaluated as being better in terms of nutritional qualities and response on the part of animals.

## Claims

1. Use of Chestnut tannins extract and/or its fractions, alone or in mixtures with other polyphenols to increase stability to storage of seeds for food raw materials, pellets for feed for animals and end-products for human and for animals by acting as anti-oxidant or as anti-microbial additive, or by acting in the reduction of nitrosamines or mycotoxins concentrations in the seeds for food raw materials, pellets for feed for animals and end-products for human and for animals, wherein the Chestnut tannins extract and its fractions, is used in liquid form in an amount ranging of from 1 to 40% by weight of tannins with respect to the total weight of the extract or its fractions, or in powder form in an amount ranging of from 30 to 90% by weight of tannins with respect to the total weight of the extract or its fractions, with the proviso that food raw materials and food for humans and for animals are not tobacco plants;
said Chestnut tannins extract and/or its fractions being added in the case of seeds for food raw materials through a first seed treatment and a second following treatment of spraying or dry-powdering of the relative ear, the first treatment being carried out with a concentration of from 0.1 to 10% by weight, with respect to the total weight of the seed to be treated, of tannins extract in powder form at 30-90 % by weight of tannins, and the second treatment being carried out with a concentration of from 0.5 to 5% by weight, with respect to the total weight of the water or liquid vehicle used to carry out the treatment of spraying on the ears, of tannins chestnut extract in liquid form and/or of one of its fractions, at 13-25% by weight of tannin;
said Chestnut tannins extract and/or its fractions being added in the case of pellets for feed for animals, in an amount of from 0.01 to 5% by weight with respect to the total weight of the product to be additivated, tannins extract being in liquid form at 37-40 % by weight of tannins;
said Chestnut tannins extract and/or its fractions being added in the case of end-products for food for humans and for animals, in an amount of from 0.0001 to 3% by weight with respect to the total weight of said end-product to be additivated.

2. Use according to one or more of the preceding claims, wherein the Chestnut tannins extract and its fractions, alone or in mixture with other polyphenols, are applied, in the liquid or solid state, to food raw materials or are added in the preparation of foods.

3. Use according to one or more of the preceding claims, wherein the Chestnut tannins extract and its fractions is used in admixture with other polyphenols selected from green tea extract, artichoke extract, olive leafs, olive paste extract, Grape seed extract, rosemary extract, beetroot extract.

4. Use according to one or more of the preceding claims, wherein the Chestnut tannins extract and its fractions, is used in liquid form in an amount ranging of from 13 to 25 % by weight of tannins with respect to the total weight of the extract or its fractions.

5. Use according to one or more of the preceding claims 1-4, wherein the Chestnut tannins extract and its fractions, associated with a beetroot extract, is used as an additive for the preservation of meat.

6. Use according to one or more of the preceding claims 1-4, wherein the Chestnut tannins extract and its fractions, possibly in mixture with other polyphenols coming from green tea extract, artichoke extract, olive leafs, olive paste extract, Grape seed extract, rosemary extract, beetroot extract is used as a feed additive for animals.

7. Method of treatment of food raw materials and food for humans and for animals consisting of using Chestnut tannins extract and/or its fractions, alone and/or in mixture with other polyphenols, according to one or more of previous claims 1-6.

## Patentansprüche

1. Verwendung von Kastanientanninextrakt und/oder dessen Fraktionen allein oder in Gemischen mit anderen Polyphenolen zum Erhöhen der Lagerstabilität von Saaten für Nahrungsmittelrohmaterialien, Pellets für Tierfutter und Endprodukten für Menschen und Tiere durch die Wirkung als Antioxidans oder als antimikrobieller Zusatzstoff, oder durch die Wirkung des Reduzierens von Nitrosamin- oder Mykotoxinkonzentrationen in den Saaten für Nahrungsmittelrohmaterialien, Pellets für Tierfutter und Endprodukte für Menschen und Tiere,
wobei der Kastanientanninextrakt und dessen Fraktionen in flüssiger Form in einer Menge im Bereich von 1 bis 40 Gew.-% Tannine, bezogen auf das Gesamtgewicht des Extrakts oder dessen Fraktionen, oder in Pulverform in einer Menge im Bereich von 30 bis 90 Gew.-% Tannine, bezogen auf das Gesamtgewicht des Extrakts oder dessen Fraktionen, unter der Maßgabe verwendet werden, dass Nahrungsmittelrohmaterialien und Nahrungsmittel für Menschen und Tiere keine Tabakpflanzen sind;
wobei der Kastanientanninextrakt und/oder dessen Fraktionen im Fall von Saaten für Nahrungsmittelrohmaterialien durch eine erste Saatenbehandlung und eine zweite darauffolgende Behandlung des Sprühens oder Sprüh-Pulverisierens des entsprechenden Kolbens zugesetzt werden, wobei die erste Behandlung mit einer Konzentration von 0,1 bis 10 Gew.-%, bezogen auf das Gesamtgewicht der zu behandelnden Saat, Tanninextrakt in Pulverform bei 30-90 Gew.-% Tannine durchgeführt wird, und die zweite Behandlung mit einer Konzentration von 0,5 bis 5 Gew.-%, bezogen auf das Gesamtgewicht des Wassers oder des flüssigen Vehikels, das zum Durchführen der Behandlung von Sprühen auf die Kolben verwendet wird, Kastanientanninextrakt in flüssiger Form und/oder einer Fraktion davon bei 13-25 Gew.-% Tannin durchgeführt wird;
wobei der Kastanientanninextrakt und/oder dessen Fraktionen im Fall von Pellets für Tierfutter in einer Menge von 0,01 bis 5 Gew.-%, bezogen auf das Gesamtgewicht des zu additivierenden Produkts, Tanninextrakt in flüssiger Form bei 37-40 Gew.-% Tannine zugesetzt werden;
wobei der Kastanientanninextrakt und/oder dessen Fraktionen im Fall von Endprodukten für Nahrungsmittel für Menschen und für Tiere in einer Menge von 0,0001 bis 3 Gew.-%, bezogen auf das Gesamtgewicht des zu additivierenden Endprodukts, zugesetzt werden.

2. Verwendung nach einem oder mehreren der vorstehenden Ansprüche, wobei der Kastanientanninextrakt und dessen Fraktionen allein oder in einem Gemisch mit anderen Polyphenolen in flüssigem oder festem Zustand auf Nahrungsmittelrohmaterialien angewendet oder bei der Herstellung von Nahrungsmitteln zugesetzt werden.

3. Verwendung nach einem oder mehreren der vorstehenden Ansprüche, wobei der Kastanientanninextrakt und dessen Fraktionen in einer Beimengung mit anderen Polyphenolen verwendet werden, die aus Grünteeextrakt, Artischockenextrakt, Olivenbaumblättern, Olivenpastenextrakt, Traubenkernextrakt, Rosmarinextrakt, Rote-Beete-Extrakt ausgewählt sind.

4. Verwendung nach einem oder mehreren der vorstehenden Ansprüche, wobei der Kastanientanninextrakt und dessen Fraktionen in flüssiger Form in einer Menge im Bereich von 13 bis 25 Gew.-% Tannine, bezogen auf das Gesamtgewicht des Extrakts oder dessen Fraktionen, verwendet werden.

5. Verwendung nach einem oder mehreren der vorstehenden Ansprüche 1-4, wobei der Kastanientanninextrakt und dessen Fraktionen, in Verbindung mit Rote-Beete-Extrakt, als Zusatzstoff für die Konservierung von Fleisch verwendet werden.

6. Verwendung nach einem oder mehreren der vorstehenden Ansprüche 1-4, wobei der Kastanientanninextrakt und dessen Fraktionen, möglicherweise in einem Gemisch mit anderen Polyphenolen, die aus Grünteeextrakt, Artischockenextrakt, Olivenbaumblättern, Olivenpastenextrakt, Traubenkernextrakt, Rosmarinextrakt, Rote-Beete-Extrakt stammen, als Futterzusatz für Tiere verwendet werden.

7. Verfahren zur Behandlung von Nahrungsmittelrohmaterialien und Nahrungsmitteln für Menschen und für Tiere, bestehend aus der Verwendung von Kastanientanninextrakt und/oder dessen Fraktionen allein und/oder in einem Gemisch mit anderen Polyphenolen nach einem oder mehreren der vorstehenden Ansprüche 1-6.

## Revendications

1. Utilisation d'un extrait de tanins de châtaignier et/ou de ses fractions, seuls ou en mélange avec d'autres polyphénols, pour augmenter la stabilité au stockage des semences de matières premières alimentaires, des granulés pour l'alimentation des animaux et des produits finis pour l'homme et les animaux, en agissant comme additif antioxydants ou antimicrobien, ou en agissant dans la réduction des concentrations de nitrosamines ou de mycotoxines dans les semences pour matières premières alimentaires, les granulés pour l'alimentation des animaux et les produits finis pour l'homme et les animaux,
dans laquelle l'extrait de tanins de châtaignier et ses fractions sont utilisés sous forme liquide, à raison de 1 à 40 % en poids de tanins par rapport au poids total de l'extrait ou de ses fractions, ou sous forme de poudre, à raison de 30 à 90 % en poids de tanins par rapport au poids total de l'extrait ou de ses fractions, à condition que les matières premières alimentaires et les aliments pour l'homme et les animaux ne soient pas des plantes de tabac;
ledit extrait de tanins de châtaignier et/ou ses fractions sont ajoutés dans le cas de semences pour matières premières alimentaires, au moyen d'un premier traitement de semences et d'un second traitement suivant de pulvérisation ou de poudrage à sec de la panouille relative, le premier traitement étant réalisé avec une concentration de 0,1 à 10 % en poids, par rapport au poids total de la semence à traiter, d'extrait de tanins sous forme de poudre à 30-90 % en poids de tanins, et le second traitement étant réalisé avec une concentration de 0,5 à 5 % en poids, par rapport au poids total de l'eau ou du véhicule liquide utilisé pour réaliser le traitement de pulvérisation sur les panouilles, de l'extrait de tanins de châtaignier sous forme liquide et/ou de l'une de ses fractions, à 13-25 % en poids de tanin;
ledit extrait de tanins de châtaignier et/ou ses fractions étant ajoutés dans le cas de granulés pour l'alimentation des animaux, à raison de 0,01 à 5 % en poids par rapport au poids total du produit à ajouter, l'extrait de tanins étant sous forme liquide à 37-40 % en poids de tanins;
ledit extrait de tanins de châtaignier et/ou ses fractions sont ajoutés dans le cas de produits finis pour l'alimentation des hommes et des animaux, à raison de 0,0001 à 3 % en poids par rapport au poids total dudit produit final à ajouter.

2. Utilisation selon une ou plusieurs des revendications précédentes, dans laquelle l'extrait de tanins de châtaignier et ses fractions, seul ou en mélange avec d'autres polyphénols, sont appliqués, à l'état liquide ou solide, sur des matières premières alimentaires ou sont ajoutés dans la préparation des aliments.

3. Utilisation selon une ou plusieurs des revendications précédentes, dans laquelle l'extrait de tanins de châtaignier et ses fractions sont utilisés en mélange avec d'autres polyphénols choisis parmi un extrait de thé vert, un extrait d'artichaut, des feuilles d'olivier, un extrait de pâte d'olive, un extrait de pépin de raisin, un extrait de romarin ou un extrait de betterave.

4. Utilisation selon une ou plusieurs des revendications précédentes, dans laquelle l'extrait de tanins de châtaignier et ses fractions sont utilisés sous forme liquide, à raison de 13 à 25 % en poids de tanins par rapport au poids total de l'extrait ou de ses fractions.

5. Utilisation selon une ou plusieurs des revendications 1 à 4 précédentes, dans laquelle l'extrait de tanins de châtaignier et ses fractions, associés à un extrait de betterave, sont utilisés comme additif pour la conservation de la viande.

6. Utilisation selon une ou plusieurs des revendications 1 à 4 précédentes, dans laquelle l'extrait de tanins de châtaignier et ses fractions, éventuellement en mélange avec d'autres polyphénols provenant d'un extrait de thé vert, d'un extrait d'artichaut, des feuilles d'olivier, d'un extrait de pâte d'olive, d'un extrait de pépins de raisin, d'un extrait de romarin, d'un extrait de betterave, est utilisé comme additif alimentaire pour les animaux.

7. Procédé de traitement des matières premières alimentaires et des aliments pour les hommes et les animaux, qui consiste à utiliser un extrait de tanins de châtaignier et/ou ses fractions, seuls et/ou en mélange avec d'autres polyphénols, selon une ou plusieurs des revendications 1-6 précédentes.
